# EUROPÄISCHE PATENTSCHRIFT

(11) **EP 2 988 635 B1**
(45) Veröffentlichungstag und Bekanntmachung des Hinweises auf die Patenterteilung: **03.04.2019**
(21) Anmeldenummer: 14705502.4
(22) Anmeldetag: 19.02.2014
(51) Int. Cl.: A47J 31/40

(54) **VERFAHREN ZUM ZUBEREITEN EINES MISCHGETRÄNKES SOWIE GETRÄNKEAUTOMAT ZUR DURCHFÜHRUNG DES VERFAHRENS**
METHOD FOR PREPARING A MIXED BEVERAGE, AND AUTOMATIC BEVERAGE MACHINE FOR CARRYING OUT THE METHOD
PROCÉDÉ DE PRÉPARATION D'UNE BOISSON MÉLANGÉE ET DISTRIBUTEUR AUTOMATIQUE DE BOISSONS PERMETTANT LA MISE EN OEUVRE DE CE PROCÉDÉ

(30) Priorität: 25.04.2013 CH 8602013
(43) Veröffentlichungstag der Anmeldung: 02.03.2016
(73) Patentinhaber: Schaerer AG, 4528 Zuchwil (CH)
(72) Erfinder: MOSIMANN, Bruno, CH-3400 Burgdorf (CH); WERTHMÜLLER, Fabian, CH-4513 Langendorf (CH); LÜSSI, André, CH-3303 Jegensdorf (CH)
(74) Vertreter: IPrime Rentsch Kaelin AG
(86) Internationale Anmeldenummer: PCT/EP2014/053183
(87) Internationale Veröffentlichungsnummer: WO 2014/173555

(56) Entgegenhaltungen:
- US-A- 2 954 145
- US-A1- 2009 095 163
- US-A1- 2010 139 361

## Beschreibung

### TECHNISCHES GEBIET

Die vorliegende Erfindung bezieht sich auf das Gebiet der Getränkeautomaten. Sie betrifft ein Verfahren zum Zubereiten eines Mischgetränkes gemäss dem Oberbegriff des Anspruchs 1.

Sie betrifft weiterhin einen Getränkeautomaten zur Durchführung des Verfahrens.

### STAND DER TECHNIK

Beim Einsatz von flüssiger Schokolade zur Zubereitung eines Schokoladenmilchgetränks in einem Getränkeautomaten ergibt sich die Problematik des Vermischens mit der Milch. Diese Problematik kann entweder dadurch gelöst werden, dass der Kunde das Getränk am Schluss noch mit einem Rührgerät manuell mischt oder der Automat die Schokolade in einem speziellen Mischventil mit der Milch vermischt.

Der Nachteil des Mischventils ist, dass zum einen eine Kontamination der Milch nicht ausgeschlossen werden kann und zum anderen das Ventil zum Verkleben neigt. Ebenfalls sind Anwendungen bekannt, bei denen der Schokoladenbehälter mittels Heizplatte auf eine bestimmte Temperatur gebracht wird. Aufgrund der langen Schläuche hat dies aber auf die Vermischung wenig Einfluss, weil die Schokolade auf dem Weg zum Vermischungsort wieder abkühlt.

Dokument EP 2 050 368 B1 offenbart eine Kaffeemaschine, die wenigstens einen Dampferzeuger zur Erzeugung von Dampf und eine Vorrichtung zur Erzeugung von Kaffee mit einer zugeordneten Auslasseinheit umfasst, sowie einen Speichertank, der ein fertig vorbereitetes flüssiges Schokoladenprodukt mit einer Dichte, die geeignet ist, um ein übliches Schokoladengetränk zuzubereiten, enthält. Weiterhin ist eine Aufheizeinheit vorhanden mit einem Einlass und einem Auslass für das zu erhitzende Produkt und einem Einlass zur Einführung des Dampfes, sowie eine Leitung zwischen dem Speichertank und dem Einlass der Aufheizeinheit, eine messende Pumpe in dieser Leitung zum Fördern einer vorbestimmten Menge des Schokoladenproduktes aus dem Speichertank zu der Aufheizeinheit und zum Zirkulieren des Produktes in der Aufheizeinheit, eine Leitung für den Dampf, die den Dampferzeuger mit dem Dampfeinlass der Aufheizeinheit verbindet, ein Absperrventil in der Dampfleitung sowie einen Getränkeauslass, der mit dem Auslass der Aufheizeinheit verbunden ist. Die Maschine ermöglicht die Ausgabe von verschiedenen Arten von Getränken wie z.B. Schokolade, Kaffee, Milch und Cappuccino. Nachteilig ist hierbei, dass das Schokoladenprodukt bereits in seiner trinkfertigen Konsistenz in einem Tank bereit gehalten wird, wodurch der Vorrat begrenzt bzw. bei ausreichendem Vorrat erheblich Platz beansprucht wird.

Dokument EP 2 060 211 B1 beschreibt eine Vorrichtung zum Herstellen und Abgeben eines Getränkes aus einem konzentrierten flüssigen Produkt, das dem Getränk den Geschmack verleiht, in einer Maschine, die zur Herstellung verschiedener Arten von auf Kaffee und Milch basierenden Getränken vorgesehen ist und einen Dampferzeuger, eine Vorrichtung zur Erzeugung von Kaffee sowie eine Quelle für flüssige Milch aufweist.

Die Vorrichtung umfasst einen Tank mit dem konzentrierten flüssigen Produkt zur Zubereitung des Getränkes, eine Verbindereinheit, die an den Tank angeschlossen ist, eine Pumpe, die so angeordnet ist, dass sie eine vorbestimmte Menge des konzentrierten Produktes aus dem Tank zur Verbindereinheit fördert, eine Wasseraufheizeinheit mit einem Einlass und einem Auslass für das Wasser und einem Einlass zum Einführen des Dampfes, eine Wasserzuführleitung, die den Einlass der Wasseraufheizeinheit mit einer Wasserquelle verbindet, ein Absperrventil in der Wasserzuführleitung, eine Leitung zur Verbindung des Auslasses für das aufgeheizte Wasser aus der Wasseraufheizeinheit mit der Verbindereinheit, um in diese eine vorbestimmte Menge Wasser einzuleiten, eine Dampfleitung zur Verbindung des Dampferzeuger mit dem Einlass für den Dampf, ein Ventil in der Dampfleitung, eine Getränkezubereitungseinheit mit einem zugehörigen Auslass, die mit der Verbindereinheit und der Quelle für die Milch verbunden ist. Das konzentrierte flüssige Produkt basiert insbesondere auf Schokolade. Nachteilig ist hierbei, dass das Schokoladenprodukt vor der Ausgabe in einer speziellen Einrichtung mit der Milch direkt vermischt wird. In der Mischeinheit ist einerseits eine unerwünschte Kontamination der Milch möglich. Andererseits kann die Mischeinheit verkleben.

Dokument EP 2 236 063 beschreibt ein Verfahren zur Zubereitung eines Getränkes, das aus einem konzentrierten flüssigen Produkt erhalten wird. Das Verfahren umfasst die folgenden Schritte: (a) Verdünnen einer vorbestimmten Menge des konzentrierten flüssigen Produktes mit einer entsprechenden Menge heissen Wassers, um ein flüssiges Produkt mit einem Verdünnungsgrad zu erhalten, der geringer ist als die optimale Verdünnung des zum Verzehr bereiten Getränkes; (b) Befördern der Menge des so verdünnten Produktes in eine Getränkebereitungseinheit; und (c) endgültige Verdünnung der Produktmenge mit einer vorbestimmten Menge Milch, bis die optimale Verdünnung für das zum Verzehr bereite Getränk erreicht ist. Hier gelten dieselben Nachteile wie beim vorher genannten Dokument.

Dokument US 2012/0000372 A1 offenbart eine Vorrichtung zur Bereitung eines Heissgetränkes, insbesondere für Milchgetränke wie Cappuccino, Schokolade und dgl.. Die Vorrichtung umfasst einen Behälter, der sich entlang einer Achse erstreckt, einen den Behälter schliessenden Deckel, einen rotierenden mechanischen Rührer, der mit einem Flügelrad ausgestattet ist, und einen Dampfstab, der mit einer Dampfquelle verbindbar ist und einen endseitigen Dampfauslass aufweist. Der Rührer und der Stab erstecken sich mit einer Neigung gegeneinander innerhalb des Behälters, und der endseitige Dampfauslass des Stabes befindet sich oberhalb und in radialer Richtung exzentrisch zum Flügelrad des Rührers. Die zusätzliche Rührvorrichtung bedeutet einen erheblichen apparativen Mehraufwand und zusätzlichen Aufwand bei der Getränkezubereitung.

### DARSTELLUNG DER ERFINDUNG

Es ist daher eine Aufgabe der Erfindung, ein Verfahren zum Zubereiten eines Mischgetränkes aus einer Basisflüssigkeit und einem konzentrierten, flüssigen Zusatzstoff anzugeben, welches die Nachteile bekannter Verfahren vermeidet und sich insbesondere dadurch auszeichnet, dass es einfach und sicher ausführbar ist und Fehlfunktionen einer entsprechenden Maschine durch Verschmutzung oder Zusetzen wirkungsvoll vermeidet.

Es ist weiterhin Aufgabe der Erfindung, einen Getränkerautomaten zur Durchführung des Verfahrens anzugeben.

Diese und andere Aufgaben werden durch die Merkmale der Ansprüche 1 und 14 gelöst.

Beim Verfahren gemäss der Erfindung zum Zubereiten eines Mischgetränkes aus einer Basisflüssigkeit und einem konzentrierten, flüssigen Zusatzstoff, welcher dem Mischgetränk einen speziellen Geschmack verleiht, wird der konzentrierte, flüssige Zusatzstoff aus einem Vorratsbehälter entnommen, anschliessend durch Zufuhr von Energie erhitzt und der erhitzte konzentrierte, flüssige Zusatzstoff dann mit der Basisflüssigkeit vermischt, wobei der erhitzte konzentrierte, flüssige Zusatzstoff und die Basisflüssigkeit über separate Ausläufe in ein darunter stehendes Gefäss, insbesondere einen Becher, ausgegeben werden und sich dort selbsttätig vermischen.

Gemäss einer Ausgestaltung des erfindungsgemässen Verfahrens wird der konzentrierte, flüssige Zusatzstoff in einer vorbestimmten Menge aus dem Vorratsbehälter (entnommen und über eine zugehörige Leitung mittels einer in der Leitung angeordneten Pumpe einer Aufheizvorrichtung zugeführt, wobei der Aufheizvorrichtung soviel Energie zugeführt wird, dass der konzentrierte, flüssige Zusatzstoff auf eine vorbestimmte Temperatur aufgeheizt wird.

Insbesondere weist die Aufheizvorrichtung eine elektrische Heizung auf, wobei die Energie als elektrische Energie zugeführt wird.

Alternativ wird der Aufheizvorrichtung die Energie in Form von heissem Dampf zugeführt, wobei der Dampf in einer Dampferzeugereinheit erzeugt und über eine zugehörige Leitung der Aufheizvorrichtung zugeführt wird.

Insbesondere wird der zugeführte Dampf in der Aufheizvorrichtung mit dem konzentrierten, flüssigen Zusatzstoff vermischt.

Insbesondere erfolgt die Mischung von Dampf und konzentriertem, flüssigen Zusatzstoff und die damit verbundene Erhitzung des konzentrierten, flüssigen Zusatzstoffs während des Durchlaufs des konzentrierten, flüssigen Zusatzstoffs durch die Aufheizvorrichtung.

Es ist grundsätzlich aber auch denkbar, dass die Mischung von Dampf und konzentriertem, flüssigen Zusatzstoff und die damit verbundene Erhitzung des konzentrierten, flüssigen Zusatzstoffs in der Aufheizvorrichtung erfolgt, und dass der aufgeheizte konzentrierte, flüssige Zusatzstoff anschliessend aus der Aufheizvorrichtung ausgegeben wird.

Vorzugsweise wird die Temperatur des erhitzten konzentrierten, flüssigen Zusatzstoffs mittels eines in der Aufheizvorrichtung angeordneten Temperaturaufnehmers gemessen und überwacht.

Eine andere Ausgestaltung des erfindungsgemässen Verfahrens zeichnet sich dadurch aus, dass der erhitzte konzentrierte, flüssige Zusatzstoff und die Basisflüssigkeit gleichzeitig in das darunter stehendes Gefäss ausgegeben werden.

Eine weitere Ausgestaltung des erfindungsgemässen Verfahrens ist dadurch gekennzeichnet, dass der erhitzte konzentrierte, flüssige Zusatzstoff Schokolade umfasst, und dass die Basisflüssigkeit Milch ist.

Eine wieder andere Ausgestaltung des erfindungsgemässen Verfahrens ist dadurch gekennzeichnet, dass der erhitzte konzentrierte, flüssige Zusatzstoff einen Sirup umfasst, und dass die Basisflüssigkeit Wasser ist.

Eine noch andere Ausgestaltung des erfindungsgemässen Verfahrens ist dadurch gekennzeichnet, dass der Auslauf für den konzentrierten, flüssigen Zusatzstoff nach der Ausgabe des erhitzten konzentrierten, flüssigen Zusatzstoffs in das darunter stehendes Gefäss mit zusätzlichem Dampf aus der Dampferzeugereinheit durchgeblasen wird.

Eine weitere Ausgestaltung des erfindungsgemässen Verfahrens ist dadurch gekennzeichnet, dass der Auslauf für den konzentrierten, flüssigen Zusatzstoff nach der Ausgabe des erhitzten konzentrierten, flüssigen Zusatzstoffs in das darunter stehendes Gefäss mit einer Spülflüssigkeit durchgespült wird.

Insbesondere wird als Spülflüssigkeit Wasser verwendet.

Vorzugsweise wird als Spülflüssigkeit heisses Wasser verwendet, welches aus einer Wasseraufheizeinheit über eine zugehörige Leitung dem Auslauf zugeführt wird.

Vorzugsweise wird der Auslauf für den konzentrierten, flüssigen Zusatzstoff nach der Ausgabe des erhitzten konzentrierten, flüssigen Zusatzstoffs in das darunter stehendes Gefäss mit Wasser durchgespült, wobei das zum Spülen verwendete Wasser in eine von der Dampferzeugereinheit zur Aufheizvorrichtung führende Leitung eingeführt wird.

Besonderes vorteilhaft ist es, wenn der Auslauf für den konzentrierten, flüssigen Zusatzstoff einen Aussenmantel und ein konzentrisch darin angeordnetes Innenrohr für den Transport des konzentrierten, flüssigen Zusatzstoffes umfasst, und wenn zum Spülen der Aussenseite des Innenrohres Spülflüssigkeit zwischen Aussenmantel und Innenrohr nach aussen abgegeben wird.

Der erfindungsgemässe Getränkeautomat zur Durchführung des Verfahrens nach der Erfindung umfasst wenigstens einen Vorratsbehälter für den konzentrierten, flüssigen Zusatzstoff zur Zubereitung des Mischgetränkes, Mittel zur Zuführung einer vorbestimmten Menge Basisflüssigkeit für das zuzubereitende Mischgetränk, und wenigstens eine Aufheizvorrichtung, die einen ersten Eingang aufweist, der über eine erste Leitung mit dem wenigstens einen Vorratsbehälter in Verbindung steht, wobei die wenigstens eine Aufheizvorrichtung zur Aufheizung des über die erste Leitung zugeführten konzentrierten, flüssigen Zusatzstoffes durch eine zugeführte Energie ausgebildet ist. Sie ist dadurch gekennzeichnet, dass eine erste Vorrichtung vorgesehen ist, über welche die Basisflüssigkeit in einen darunter stehenden Behälter, insbesondere Becher ausgegeben werden kann, und dass eine zweite, von der ersten getrennte Vorrichtung vorgesehen ist, über welche der erhitzte konzentrierte, flüssige Zusatzstoff in den darunter stehenden Behälter ausgegeben werden kann.

Eine Ausgestaltung des erfindungsgemässen Getränkeautomaten ist dadurch gekennzeichnet, dass die zweite Vorrichtung wenigstens einen Auslauf umfasst, der mit einem Ausgang der wenigstens einen Aufheizvorrichtung in direkter Verbindung steht.

Eine andere Ausgestaltung des erfindungsgemässen Getränkeautomaten ist dadurch gekennzeichnet, dass in der ersten Leitung Mittel zum Fördern des konzentrierten, flüssigen Zusatzstoffes, insbesondere in Form einer Pumpe, angeordnet sind.

Gemäss einer weiteren Ausgestaltung ist in der Aufheizvorrichtung zur Aufheizung des über die erste Leitung zugeführten konzentrierten, flüssigen Zusatzstoffes eine elektrische Heizung angeordnet.

Es ist aber auch denkbar, dass eine Dampferzeugereinheit zur Erzeugung von Dampf zur Aufheizung des konzentrierten, flüssigen Zusatzstoffes vorgesehen ist, dass die Aufheizvorrichtung einen zweiten Eingang aufweist, der über eine zweite Leitung an die Dampferzeugereinheit angeschlossen ist, und dass in der zweiten Leitung ein erstes steuerbares Ventil zur Steuerung der Menge des der Aufheizvorrichtung zugeführten Dampfes angeordnet ist.

Eine weitere Ausgestaltung des erfindungsgemässen Getränkeautomaten ist dadurch gekennzeichnet, dass in der zweiten Leitung ein erstes steuerbares Ventil zur Steuerung der Menge des der Aufheizvorrichtung zugeführten Dampfes angeordnet ist.

Insbesondere ist eine Wasseraufheizeinheit vorgesehen, deren Ausgang über eine dritte Leitung mit der zweiten Vorrichtung in Verbindung steht.

Vorzugsweise mündet die dritte Leitung zwischen dem ersten steuerbaren Ventil und der Aufheizvorrichtung in die zweite Leitung.

Vorzugsweise ist in der dritten Leitung eine Pumpe zum Fördern des Wassers aus der Wasseraufheizeinheit angeordnet.

Besonderes vorteilhaft ist es, wenn die zweite Vorrichtung wenigstens einen Auslauf umfasst, der mit einem Ausgang der wenigstens einen Aufheizvorrichtung in direkter Verbindung steht, wenn der wenigstens eine Auslauf einen Aussenmantel und ein konzentrisch darin angeordnetes Innenrohr für den Transport des konzentrierten, flüssigen Zusatzstoffes umfasst, und wenn zum Spülen der Aussenseite des Innenrohres eine vierte Leitung den Ausgang der Wasseraufheizeinheit mit dem Raum zwischen Aussenmantel und Innenrohr verbindet.

Vorzugsweise zweigt die vierte Leitung von der dritten Leitung stromabwärts der Pumpe ab.

Eine andere Ausgestaltung des erfindungsgemässen Getränkeautomaten ist dadurch gekennzeichnet, dass mehrere Vorratsbehälter für unterschiedliche konzentrierte, flüssigen Zusatzstoffe vorgesehen sind, dass jedem der Vorratsbehälter eine eigene Aufheizvorrichtung und eine eigene zweite Vorrichtung zugeordnet sind, und dass jede Aufheizvorrichtung über eine zugehörige erste Leitung mit dem zugehörigen Vorratsbehälter in Verbindung steht.

Eine noch andere Ausgestaltung des erfindungsgemässen Getränkeautomaten ist dadurch gekennzeichnet, dass eine Steuereinheit zur automatischen Steuerung der Förder-, Aufheiz- und Ausgabevorgänge vorgesehen ist.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: ein stark vereinfachtes Schema eines Getränkeautomaten gemäss einem Ausführungsbeispiel der Erfindung mit einem Auslauf für mehrere Zusatzstoffe; und
- Fig. 2: ein stark vereinfachtes Schema eines Getränkeautomaten gemäss einem anderen Ausführungsbeispiel der Erfindung mit einem separaten Auslauf für jeden der mehreren Zusatzstoffe.

### WEGE ZUR AUSFÜHRUNG DER ERFINDUNG

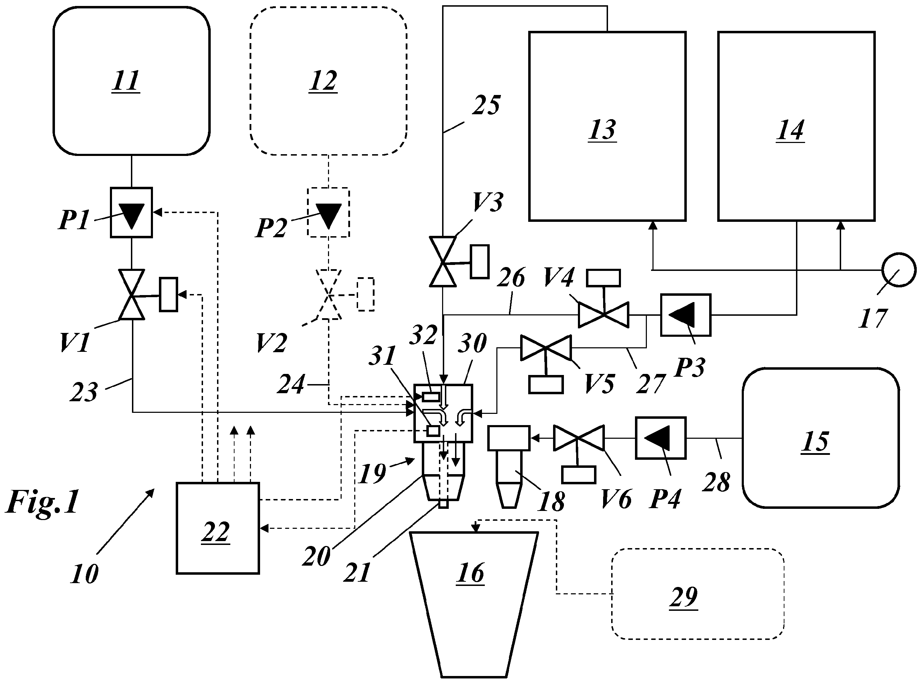

In Fig. 1 ist ein stark vereinfachtes Schema eines Getränkeautomaten gemäss einem Ausführungsbeispiel der Erfindung wiedergegeben. Der Getränkeautomat 10 der Fig. 1 ist dafür ausgelegt, aus einer Basisflüssigkeit, insbesondere Milch oder Wasser, durch Vermischen mit einem konzentrierten, flüssigen Zusatzstoff, insbesondere Schokolade oder Sirup oder dgl., in einem Gefäss, insbesondere einem Becher 16, ein fertiges Getränk zuzubereiten. Dazu werden der konzentrierte, flüssige Zusatzstoff und die Basisflüssigkeit getrennt in das Gefäss bzw. den Becher 16 eingefüllt und mischen sich dort selbsttätig.

Der Getränkeautomat 10 kann zusätzlich auch zur Zubereitung und Abgabe von Kaffeegetränken ausgelegt sein, in welchem Falle eine Kaffeezubereitungseinheit 29 (in Fig. 1 gestrichelt eingezeichnet) vorgesehen ist, die das Kaffeegetränk, das mit Milch, Milchschaum oder einem den Geschmack verändernden Sirup versetzt sein oder werden kann, zubereitet und in den Becher 16 ausgibt.

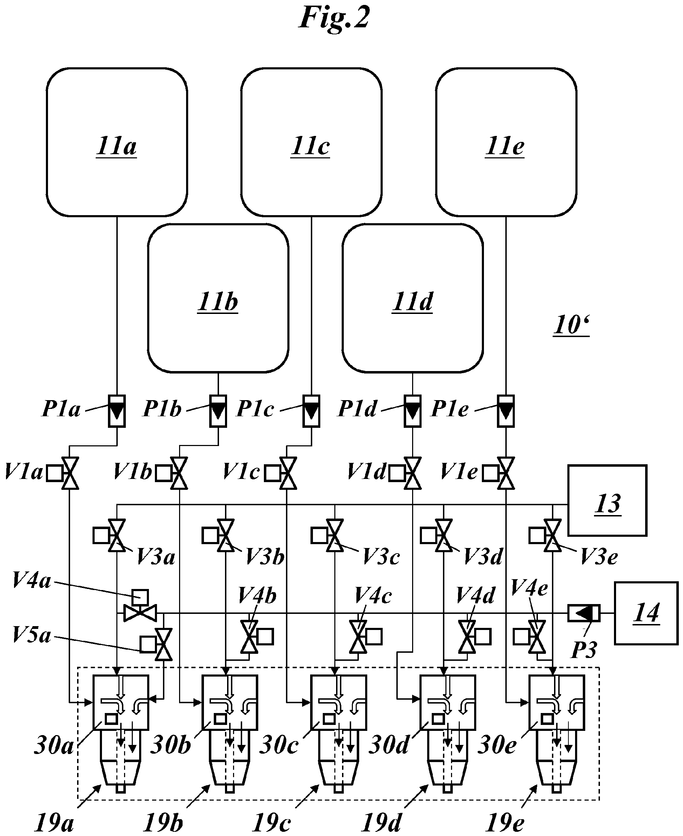

Der konzentrierte, flüssige Zusatzstoff wird in einem eigenen Vorratsbehälter 11 bereitgehalten, der beispielsweise als austauschbarer Kanister ausgebildet sein kann. Weitere Zusatzstoffe können in weiteren Vorratsbehältern bereit gehalten werden (siehe insbesondere Fig. 2). In Fig. 1 ist (optional) ein weiterer Vorratsbehälter 12 gestrichelt eingezeichnet. Von jedem der Vorratsbehälter 11, 12 führt eine Leitung 23 bzw. 24 zu einem Auslauf 19, um von dort in den Becher 16 ausgegeben zu werden. Im Beispiel der Fig. 1 wird derselbe Auslauf 19 für die beiden Vorratsbehälter und die darin befindlichen Zusatzstoffe verwendet; im Beispiel der Fig. 2 ist demgegenüber jedem der fünf verschiedenen Zusatzstoffe (Vorratsbehälter 11a-e) ein eigener Auslauf (1 9a-e) zugeordnet.

Zur Förderung der konzentrierten, flüssigen Zusatzstoffe ist in jeder der Leitungen 23, 24 vorzugsweise eine geeignete Pumpe P1, P2 angeordnet, die motorisch angetrieben ist und von einer zentralen Steuereinheit 22 aus gesteuert wird (in Fig. 1 ist der Einfachheit halber nur die Steuerleitung von der Steuereinheit 22 zur Pumpe P1 und zu einem dahinter angeordneten steuerbaren Ventil V1 gestrichelt eingezeichnet; die anderen Pumpen und Ventile der Fig. 1 sind jedoch in gleicher Weise mit der Steuereinheit 22 verbunden). Geeignete Pumpen sind wegen der überwiegend relativ hohen Viskosität der Zusatzstoffe vor allem Schlauchquetschpumpen, die zugleich zur genauen Dosierung der Zusatzstoffe herangezogen werden können. Steuerbare Ventile V1, V2 können zusätzlich in den Leitungen 23, 24 eingesetzt werden, um beispielsweise ein Nachlaufen der Zusatzstoffe sicher zu verhindern.

Da die Viskosität der Zusatzstoffe aus den Vorratsbehältern 11, 12, insbesondere auch im Fall von Schokolade als Zusatzstoff, vergleichsweise hoch ist, würde bei einer einfachen Ausgabe in den Becher 16 eine Mischung mit der zugegebenen Basisflüssigkeit, im Falle der Schokolade mit der Milch, nicht oder nur sehr unvollständig stattfinden. Ein nachträgliches Umrühren des Becherinhaltes wäre unvermeidlich, ist aber im Hinblick auf eine einfache Bedienung des Gerätes in hohem Masse unerwünscht.

Es wird daher bei der hier erläuterten Lösung die Viskosität des Zusatzstoffes vor der Abgabe in den Becher 16 über den Auslauf 19 deutlich herabgesetzt. Dies geschieht durch Aufheizen des Zusatzstoffes entweder mittels einer elektrischen Heizung 32 oder mittels heissem Dampf in einer vor dem Auslauf 19 angeordneten Aufheizvorrichtung 30. In dieser Aufheizvorrichtung 30 wird der aus einem der Vorratsbehälter 11, 12 mittels der zugehörigen Pumpe P1 bzw. P2 geförderte Zusatzstoff durch elektrisches Aufheizen oder durch thermischen Kontakt mit oder durch direktes Zumischen von heissem Dampf erhitzt, so dass er vergleichsweise dünnflüssig aus dem Auslauf 19 in den darunter stehenden Becher 16 gelangt und sich dort selbsttätig mit der gleichzeitig eingefüllten Basisflüssigkeit vermischt. Die Herabsetzung der Viskosität wird dabei einerseits durch die Erhitzung des Zusatzstoffes bewirkt, und andererseits durch ein gewisses Mass an Verdünnung mit dem im Zusatzstoff kondensierenden Wasserdampf.

Die elektrische Heizung 32 wird beispielsweise von der zentralen Steuereinheit 22 in kontrollierter Weise mit elektrischer Energie versorgt. Im Falle der Aufheizung durch Dampf wird der in die Aufheizvorrichtung 30 eingeführte Dampf vorzugsweise in einer separaten Dampferzeugereinheit 13 erzeugt und über eine zugehörige Leitung 25 zur Aufheizvorrichtung 30 transportiert. Die Dampferzeugereinheit 13 erhält das dazu benötigte Wasser beispielsweise aus einer Wasserquelle 17, die als Wasservorratsbehälter oder als Wasseranschluss ausgebildet sein kann. Die Vermischung und Aufheizung des Zusatzstoffes mit dem über die Leitung 25 (Dampfleitung) zugeführten Dampf erfolgt beim Durchströmen der Aufheizvorrichtung 30, so dass die Zusatzstoff-Dampf-Mischung unmittelbar nach unten in den anschliessenden Auslauf 19 austritt. Es ist grundsätzlich aber auch denkbar, in der Aufheizvorrichtung 30 eine vorgegebene Menge Zusatzstoff durch Zugabe von Dampf aufzuheizen und erst nach Erreichen einer vorgegebenen Temperatur nach unten in den Auslauf 19 herauszulassen. In beiden Fällen kann die erreichte Temperatur des aufgeheizten Zusatzstoffes mittels eines an oder in der Aufheizvorrichtung 30 angeordneten Temperaturaufnehmers 31 gemessen und zu Steuerungszwecken an die Steuereinheit 22 übermittelt werden. Die Zufuhr des Dampfes zur Aufheizvorrichtung wird dabei durch ein steuerbares Ventil V3 gesteuert, das in der (Dampf-)Leitung 25 angeordnet ist und von der Steuereinheit 22 aktiviert wird. Ebenso ist es denkbar, den durch ein Rohr fliessenden Zusatzstoff durch aussen an das Rohr herangeführten heissen Dampf indirekt aufzuheizen.

Ist das Aufheizen der vorbestimmten Menge an Zusatzstoff beendet und der aufgeheizte Zusatzstoff in den Becher 16 ausgegeben, kann der Auslauf 19 mit einem Dampfstoss über die Leitung 25 "ausgeblasen" werden, wodurch ein Nachtropfen des in der Viskosität herabgesetzten Zusatzstoffes weitgehend vermieden wird.

Zusätzlich zu dem "Ausblasen" mittels Dampfstoss kann nachträglich ein Spülen der mit dem Zusatzstoff beaufschlagten Leitungen und Kanäle in der Aufheizvorrichtung 30 und im dahinter angeordneten Auslauf 19 durch eine Spülflüssigkeit vorgesehen werden. Als Spülflüssigkeit kommt dabei vor allem Wasser, insbesondere warmes oder heisses Wasser, in Frage, das bei einem Getränkeautomaten, der Heissgetränke auf Wasserbasis wie z.B. Kaffee, Suppen, Glühwein oder dgl. zubereitet, ohnehin vorhanden ist. Ein entsprechende Wasseraufheizeinheit 14 (Heisswasserbereiter, Boiler) ist dann über eine Leitung 26 (Heisswasserleitung) an die Aufheizvorrichtung 30 angeschlossen, so dass über ein in der Leitung 26 angeordnetes Ventil V4 mittels einer Pumpe P3 Heisswasser in die Aufheizvorrichtung 30 eingeführt und der gesamte Leitungsabschnitt bis zum unteren Ende des Auslaufs 19 innen durchgespült werden kann. Auch dieser Vorgang wird von der Steuereinheit 22 über die Pumpe P3 und das Ventil V4 gesteuert. Es ist dabei zweckmässig, das zum Spülen verwendete Heisswasser zwischen dem Ventil V3 und der Aufheizvorrichtung 30 in die (Dampf-)Leitung 25 einzuspeisen. Wird zum Spülen kaltes Wasser verwendet, kann die Wasseraufheizeinheit 14 durch einen Wasserbehälter ersetzt werden.

Eine zusätzliche "Aussenspülung" ist für den Fall vorgesehen, dass der Auslauf 19 als ummantelter Auslauf ausgebildet ist, bei dem ein Innenrohr 21 für den Zusatzstoff konzentrisch von einem Aussenmantel 20 umgeben ist. Der ringförmige Zwischenraum zwischen Innenrohr 21 und Aussenmantel 20 kann dann dazu eingesetzt werden, mit einer durch den Ringraum geförderten Spülflüssigkeit das freie Ende des Innenrohres 21 von aussen anhaftenden Zusatzstoffresten, Verkrustungen etc. zu befreien. Hierzu wird im Beispiel der Fig. 1 von der Leitung 26 für das heisse Wasser eine weitere Leitung 27 abgezweigt und über ein steuerbares Ventil V5 zu der Aufheizvorrichtung 30 geführt, wo das heisse Wasser in den ringförmigen Zwischenraum zwischen Innenrohr 21 und Aussenmantel 20 des Auslaufs 19 eingespiesen wird. Der Spülanschluss kann aber auch direkt am Auslauf 19 angeordnet sein.

Soll ein Schokoladengetränk zubereitet werden, wird durch eine separate Milchausgabeeinheit 18 zu dem erhitzten Schokoladen-Zusatzstoff kalte oder heisse Milch in den Becher 16 eingefüllt, die aus einer Milchquelle 15 über eine Leitung 28 mittels einer Pumpe P4 zur Milchausgabeeinheit 18 gefördert wird. Die Milchquelle 15 kann einen Vorratsbehälter für Milch umfassen. Sie kann aber auch die Milch aus einem Konzentrat oder Milchpulver durch Vermischen mit kaltem oder heissem Wasser erzeugen. Kalte Milch kann innerhalb der Milchquelle 15 z.B. in einem Durchlauferhitzer oder durch Zugabe von Heissdampf erhitzt werden. Es ist aber auch denkbar, kalte Milch auf dem Weg zur Milchausgabeeinheit 18 zu erhitzen (in Fig.1 nicht dargestellt). Ein gesteuertes Ventil V6 in der Leitung 28 steuert - zusätzlich zur Pumpe P4 - den Milchfluss.

In Fig. 2 ist das vereinfachte Schema für die Zuführung von fünf verschiedenen Zusatzstoffen in einem Getränkeautomaten 10' wieder gegeben. Jedem der Zusatzstoffe ist ein eigener Vorratsbehälter 11a-e, eine eigene Aufheizvorrichtung 30a-e und ein eigener Auslauf 19a-e zugeordnet. Damit wird eine Verunreinigung eines Zusatzstoffes durch einen anderen sicher vermieden. Jeder Zusatzstoff wird über eine eigene Leitung mit einer Pumpe P1a-e und einem Ventil V1a-e zur entsprechenden Aufheizvorrichtung 30a-e gefördert, wo er mit Dampf aus der Dampferzeugereinheit 13 vermischt und erhitzt wird. Für die Steuerung der Dampfzufuhr sind entsprechende Ventile V3a-e vorgesehen.

Für die Innenspülung der Innenrohre in den Ausläufen 19a-e kann die von der Wasseraufheizeinheit 14 kommende Leitung wahlweise über entsprechende Ventile V4a-e auf die von der Dampferzeugereinheit 13 zu den Ausläufen 19a-e führenden Heissdampfleitungen geschaltet werden. Eine entsprechende Aussenspülung wie in Fig. 1 ist aus Platzgründen nur für den Auslauf 19a eingezeichnet und erfolgt über eine Ventil V5a. Die anderen Ausläufe 19b-e können in analoger Weise aussen gespült werden. Es ist aber auch denkbar, für alle Ausläufe 19a-e durch Verbindung aller Ringräume zwischen Innenrohr und Aussenmantel eine gemeinsame Aussenspülung vorzusehen, die nur über ein Ventil angesteuert wird und bei Bedarf immer alle Ausläufe 1 9a-e gemeinsam spült.

Die einzelnen Ausläufe 19a-e sind in Fig. 2 aus Gründen der Übersichtlichkeit in einer Reihe nebeneinander dargestellt. Im realen Getränkeautomaten sind sie jedoch räumlich so zusammengefasst (z.B. in zwei parallelen Reihen oder in Ringform angeordnet), dass sie alle den erhitzten Zusatzstoff in einen darunter stehenden Becher ausgeben können, ohne dass der Becher verschoben werden muss. Selbstverständlich sind in diese Anordnung auch die (in Fig. 2 nicht gezeigte) Milchausgabeeinheit 18 und andere im Automaten vorhandene Ausläufe (z.B. für Kaffeegetränke) integriert.

Für die Zubereitung eines Schokoladenmilchgetränks ergibt sich nach der vorliegenden Erfindung der folgende Lösungsweg: Kurz vor der Ausgabe wird die flüssige Schokolade mit zusätzlichem Dampf auf eine höhere Temperatur gebracht, um so die Viskosität zu erniedrigen und das Vermischen mit der Milch zu erleichtern. Die Dampfmenge muss so abgestimmt sein, dass die Schokolade nicht verbrannt wird und die korrekte Temperatur erreicht wird.

Vorteil dieser Lösung ist unter Anderem, dass der Schokoladen-Auslauf mit dem Dampf "ausgeblasen" werden kann und das Nachtropfen am Auslauf dadurch vermindert wird.

Zusätzlich kann über den Dampfpfad auch Wasser in den Auslauf eingebracht werden, um so eine (innere) Spülung zu ermöglichen. Darüber hinaus kann auch eine äussere Spülung des Auslaufs vorgesehen werden.

Nebst Schokolade kann man mit der Erfindung selbstverständlich auch andere Zusatzstoffe bzw. Zutaten wie z.B. Sirup, Sake, Glühwein oder ähnliches aufheizen.

### Bezugszeichenliste

- 10,10': Getränkeautomat
- 11,12: Vorratsbehälter (für fl. Schokolade, Sirup etc.)
- 11a-e: Vorratsbehälter
- 13: Dampferzeugereinheit
- 14: Wasseraufheizeinheit
- 15: Milchquelle
- 16: Becher
- 17: Wasserquelle
- 18: Milchausgabeeinheit
- 19: Auslauf
- 19a-e: Auslauf
- 20: Aussenmantel
- 21: Innenrohr
- 22: Steuereinheit
- 23-28: Leitung
- 29: Kaffeezubereitungseinheit
- 30: Aufheizvorrichtung
- 30a-e: Aufheizvorrichtung
- 31: Temperaturaufnehmer
- 32: Heizung (elektrisch)
- P1-P4: Pumpe
- P1a-e: Pumpe
- V1-V6: Ventil
- V1a-e: Ventil
- V3a-e: Ventil
- V4a-e: Ventil
- V5a: Ventil

## Patentansprüche

1. Verfahren zum Zubereiten eines Mischgetränkes aus einer Basisflüssigkeit und einem konzentrierten, flüssigen Zusatzstoff, welcher dem Mischgetränk einen speziellen Geschmack verleiht, bei welchem Verfahren der konzentrierte, flüssige Zusatzstoff aus einem Vorratsbehälter (11, 12; 11a-e) entnommen, anschliessend durch Zufuhr von Energie erhitzt und der erhitzte konzentrierte, flüssige Zusatzstoff dann mit der Basisflüssigkeit vermischt wird, **dadurch gekennzeichnet, dass** der erhitzte konzentrierte, flüssige Zusatzstoff und die Basisflüssigkeit über separate Ausläufe (18, 19; 19a-e) in ein darunter stehendes Gefäss, insbesondere einen Becher (16), ausgegeben werden und sich dort selbsttätig vermischen.

2. Verfahren nach Anspruch 1, **dadurch gekennzeichnet, dass** der konzentrierte, flüssige Zusatzstoff in einer vorbestimmten Menge aus dem Vorratsbehälter (11, 12; 11a-e) entnommen und über eine zugehörige Leitung (23, 24) mittels einer in der Leitung (23, 24) angeordneten Pumpe (P1, P2; P1a-e) einer Aufheizvorrichtung (30; 30a-e) zugeführt wird, und dass der Aufheizvorrichtung (30; 30a-e) soviel Energie zugeführt wird, dass der konzentrierte, flüssige Zusatzstoff auf eine vorbestimmte Temperatur aufgeheizt wird.

3. Verfahren nach Anspruch 2, **dadurch gekennzeichnet, dass** die Aufheizvorrichtung (30; 30a-e) eine elektrische Heizung (32) aufweist, und dass die Energie als elektrische Energie zugeführt wird.

4. Verfahren nach Anspruch 2, **dadurch gekennzeichnet, dass** der Aufheizvorrichtung (30; 30a-e) die Energie in Form von heissem Dampf zugeführt wird, dass der Dampf in einer Dampferzeugereinheit (13) erzeugt und über eine zugehörige Leitung (25) der Aufheizvorrichtung (30; 30a-e) zugeführt wird, dass der zugeführte Dampf in der Aufheizvorrichtung (30; 30a-e) mit dem konzentrierten, flüssigen Zusatzstoff vermischt wird, und dass die Mischung von Dampf und konzentriertem, flüssigen Zusatzstoff und die damit verbundene Erhitzung des konzentrierten, flüssigen Zusatzstoffs während des Durchlaufs des konzentrierten, flüssigen Zusatzstoffs durch die Aufheizvorrichtung (30; 30a-e) erfolgt.

5. Verfahren nach Anspruch 2, **dadurch gekennzeichnet, dass** die Temperatur des erhitzten konzentrierten, flüssigen Zusatzstoffs mittels eines in der Aufheizvorrichtung (30; 30a-e) angeordneten Temperaturaufnehmers (31) gemessen und überwacht wird.

6. Verfahren nach Anspruch 1, **dadurch gekennzeichnet, dass** der erhitzte konzentrierte, flüssige Zusatzstoff und die Basisflüssigkeit gleichzeitig in das darunter stehendes Gefäss (16) ausgegeben werden.

7. Verfahren nach Anspruch 1, **dadurch gekennzeichnet, dass** der erhitzte konzentrierte, flüssige Zusatzstoff Schokolade umfasst, und dass die Basisflüssigkeit Milch ist.

8. Verfahren nach Anspruch 1, **dadurch gekennzeichnet, dass** der erhitzte konzentrierte, flüssige Zusatzstoff einen Sirup umfasst, und dass die Basisflüssigkeit Wasser ist.

9. Verfahren nach Anspruch 2, **dadurch gekennzeichnet, dass** der Aufheizvorrichtung (30; 30a-e) die Energie in Form von heissem Dampf zugeführt wird, dass der Dampf in einer Dampferzeugereinheit (13) erzeugt und über eine zugehörige Leitung (25) der Aufheizvorrichtung (30; 30a-e) zugeführt wird, und dass der Auslauf (19; 19a-e) für den konzentrierten, flüssigen Zusatzstoff nach der Ausgabe des erhitzten konzentrierten, flüssigen Zusatzstoffs in das darunter stehendes Gefäss (16) mit zusätzlichem Dampf aus der Dampferzeugereinheit (13) durchgeblasen wird.

10. Verfahren nach Anspruch 1, **dadurch gekennzeichnet, dass** der Auslauf (19; 19a-e) für den konzentrierten, flüssigen Zusatzstoff nach der Ausgabe des erhitzten konzentrierten, flüssigen Zusatzstoffs in das darunter stehendes Gefäss (16) mit einer Spülflüssigkeit durchgespült wird, und dass als Spülflüssigkeit heisses Wasser verwendet wird, welches aus einer Wasseraufheizeinheit (14) über eine zugehörige Leitung dem Auslauf (19; 19a-e) zugeführt wird.

11. Verfahren nach Anspruch 2, **dadurch gekennzeichnet, dass** der Aufheizvorrichtung (30; 30a-e) die Energie in Form von heissem Dampf zugeführt wird, dass der Dampf in einer Dampferzeugereinheit (13) erzeugt und über eine zugehörige Leitung (25) der Aufheizvorrichtung (30; 30a-e) zugeführt wird, dass der zugeführte Dampf in der Aufheizvorrichtung (30; 30a-e) mit dem konzentrierten, flüssigen Zusatzstoff vermischt wird, und dass der Auslauf (19; 19a-e) für den konzentrierten, flüssigen Zusatzstoff nach der Ausgabe des erhitzten konzentrierten, flüssigen Zusatzstoffs in das darunter stehendes Gefäss (16) mit Wasser durchgespült wird, und dass das zum Spülen verwendete Wasser in eine von der Dampferzeugereinheit (13) zur Aufheizvorrichtung (30; 30a-e) führende Leitung (25) eingeführt wird.

12. Verfahren nach Anspruch 1, **dadurch gekennzeichnet, dass** der Auslauf (19; 19a-e) für den konzentrierten, flüssigen Zusatzstoff nach der Ausgabe des erhitzten konzentrierten, flüssigen Zusatzstoffs in das darunter stehendes Gefäss (16) mit einer Spülflüssigkeit durchgespült wird, dass der Auslauf (19; 19a-e) für den konzentrierten, flüssigen Zusatzstoff einen Aussenmantel (20) und ein konzentrisch darin angeordnetes Innenrohr (21) für den Transport des konzentrierten, flüssigen Zusatzstoffes umfasst, und dass zum Spülen der Aussenseite des Innenrohres (21) Spülflüssigkeit zwischen Aussenmantel (20) und Innenrohr (21) nach aussen abgegeben wird.

13. Getränkeautomat (10) zur Durchführung des Verfahrens nach Anspruch 1, umfassend wenigstens einen Vorratsbehälter (11, 12; 11a-e) für den konzentrierten, flüssigen Zusatzstoff zur Zubereitung des Mischgetränkes, Mittel (15, 28, P4, V6) zur Zuführung einer vorbestimmten Menge Basisflüssigkeit für das zuzubereitende Mischgetränk, und wenigstens eine Aufheizvorrichtung (30; 30a-e), die einen ersten Eingang aufweist, der über eine erste Leitung (23, 24) mit dem wenigstens einen Vorratsbehälter (11, 12; 11a-e) in Verbindung steht, wobei die wenigstens eine Aufheizvorrichtung (30; 30a-e) zur Aufheizung des über die erste Leitung (23, 24) zugeführten konzentrierten, flüssigen Zusatzstoffes durch eine zugeführte Energie ausgebildet ist, **dadurch gekennzeichnet, dass** eine erste Vorrichtung (18) vorgesehen ist, über welche die Basisflüssigkeit in einen darunter stehenden Behälter, insbesondere Becher (16) ausgegeben werden kann, und dass eine zweite, von der ersten getrennte Vorrichtung (19, 20, 21; 19a-e) vorgesehen ist, über welche der erhitzte konzentrierte, flüssige Zusatzstoff in den darunter stehenden Behälter (16) ausgegeben werden kann.

14. Getränkeautomat nach Anspruch 13, **dadurch gekennzeichnet, dass** die zweite Vorrichtung wenigstens einen Auslauf (19; 19a-e) umfasst, der mit einem Ausgang der wenigstens einen Aufheizvorrichtung (30; 30a-e) in direkter Verbindung steht.

15. Getränkeautomat nach Anspruch 13, **dadurch gekennzeichnet, dass** in der ersten Leitung (23, 24) Mittel zum Fördern des konzentrierten, flüssigen Zusatzstoffes, insbesondere in Form einer Pumpe (P1, P2; P1a-e), angeordnet sind.

16. Getränkeautomat nach Anspruch 13, **dadurch gekennzeichnet, dass** in der Aufheizvorrichtung (30; 30a-e) zur Aufheizung des über die erste Leitung (23, 24) zugeführten konzentrierten, flüssigen Zusatzstoffes eine elektrische Heizung (32) angeordnet ist.

17. Getränkeautomat nach Anspruch 13, **dadurch gekennzeichnet, dass** eine Dampferzeugereinheit (13) zur Erzeugung von Dampf zur Aufheizung des konzentrierten, flüssigen Zusatzstoffes vorgesehen ist, dass die Aufheizvorrichtung (30; 30a-e) einen zweiten Eingang aufweist, der über eine zweite Leitung (25) an die Dampferzeugereinheit (13) angeschlossen ist, dass in der zweiten Leitung (25) ein erstes steuerbares Ventil (V3; V3a-e) zur Steuerung der Menge des der Aufheizvorrichtung (30; 30a-e) zugeführten Dampfes angeordnet ist, und dass eine Wasseraufheizeinheit (14) vorgesehen ist, deren Ausgang über eine dritte Leitung (26) mit der zweiten Vorrichtung (19, 20, 21; 19a-e) in Verbindung steht.

18. Getränkeautomat nach Anspruch 17, **dadurch gekennzeichnet, dass** die dritte Leitung (26) zwischen dem ersten steuerbaren Ventil (V3; V3a-e) und der Aufheizvorrichtung (30; 30a-e) in die zweite Leitung (25) mündet.

19. Getränkeautomat nach Anspruch 17, **dadurch gekennzeichnet, dass** in der dritten Leitung (26) eine Pumpe (P3) zum Fördern des Wassers aus der Wasseraufheizeinheit (14) angeordnet ist, dass die zweite Vorrichtung wenigstens einen Auslauf (19; 1 9a-e) umfasst, der mit einem Ausgang der wenigstens einen Aufheizvorrichtung (30; 30a-e) in direkter Verbindung steht, dass der wenigstens eine Auslauf (19; 19a-e) einen Aussenmantel (20) und ein konzentrisch darin angeordnetes Innenrohr (21) für den Transport des konzentrierten, flüssigen Zusatzstoffes umfasst, dass zum Spülen der Aussenseite des Innenrohres (21) eine vierte Leitung (27) den Ausgang der Wasseraufheizeinheit (14) mit dem Raum zwischen Aussenmantel (20) und Innenrohr (21) verbindet, und dass die vierte Leitung (27) von der dritten Leitung (26) stromabwärts der Pumpe (P3) abzweigt.

20. Getränkeautomat nach Anspruch 13, **dadurch gekennzeichnet, dass** mehrere Vorratsbehälter (11, 12; 11a-e) für unterschiedliche konzentrierte, flüssigen Zusatzstoffe vorgesehen sind, dass jedem der Vorratsbehälter (11, 12; 11a-e) eine eigene Aufheizvorrichtung (30; 30a-e) und eine eigene zweite Vorrichtung (19, 20, 21; 19a-e) zugeordnet sind, und dass jede Aufheizvorrichtung (30; 30a-e) über eine zugehörige erste Leitung (23, 24) mit dem zugehörigen Vorratsbehälter (11, 12; 11a-e) in Verbindung steht.

21. Getränkeautomat nach Anspruch 13, **dadurch gekennzeichnet, dass** eine Steuereinheit (22) zur automatischen Steuerung der Förder-, Aufheiz- und Ausgabevorgänge vorgesehen ist.

## Claims

1. A method for preparing a mixed beverage from a base liquid and a concentrated liquid additive that imparts a special taste to the mixed beverage, in which method the concentrated liquid additive is withdrawn from a storage container (11, 12; 11a-e) and is subsequently heated by supplying energy, and the heated, concentrated liquid additive is then mixed with the base liquid, **characterized in that** the heated, concentrated liquid additive and the base liquid are dispensed via separate outflow spouts (18, 19; 19a-e) into a container, in particular a cup (16), situated underneath, where they automatically mix with each other.

2. The method according to Claim 1, **characterized in that** the concentrated liquid additive is withdrawn in a predetermined quantity from the storage container (11, 12; 11a-e) and is supplied to a heating device (30; 30a-e) via an associated line (23, 24) by means of a pump (P1, P2; P1a-e) situated in the line (23, 24), and that such an amount of energy is supplied to the heating device (30; 30a-e) that the concentrated liquid additive is heated to a predetermined temperature.

3. The method according to Claim 2, **characterized in that** the heating device (30; 30a-e) comprises an electric heater (32), and that the energy is supplied as electrical energy.

4. The method according to Claim 2, **characterized in that** the energy is supplied to the heating device (30; 30a-e) in the form of hot steam, that the steam is generated in a steam generator unit (13) and is supplied to the heating device (30; 30a-e) via an associated line (25), that the supplied steam is mixed with the concentrated liquid additive in the heating device (30; 30a-e), and that the mixing of steam and concentrated liquid additive and the associated heating of the concentrated liquid additive take place while the concentrated liquid additive passes through the heating device (30; 30a-e).

5. The method according to Claim 2, **characterized in that** the temperature of the heated, concentrated liquid additive is measured and monitored by means of a temperature sensor (31) situated in the heating device (30; 30a-e).

6. The method according to Claim 1, **characterized in that** the heated, concentrated liquid additive and the base liquid are simultaneously dispensed into the container (16) situated underneath.

7. The method according to Claim 1, **characterized in that** the heated, concentrated liquid additive comprises chocolate, and that the base liquid is milk.

8. The method according to Claim 1, **characterized in that** the heated, concentrated liquid additive comprises a syrup, and that the base liquid is water.

9. The method according to Claim 2, **characterized in that** the energy is supplied to the heating device (30; 30a-e) in the form of hot steam, that the steam is generated in a steam generator unit (13) and supplied to the heating device (30; 30a-e) via an associated line (25), and that additional steam from the steam generator unit (13) is blown through the outflow spout (19; 19a-e) for the concentrated liquid additive after the heated, concentrated liquid additive is dispensed into the container (16) situated underneath.

10. The method according to Claim 1, **characterized in that** the outflow spout (19; 19a-e) for the concentrated liquid additive is flushed with a flushing liquid after the heated, concentrated liquid additive is dispensed into the container (16) situated underneath, and that hot water, which is supplied to the outflow spout (19; 19a-e) from a water heating unit (14) via an associated line, is used as flushing liquid.

11. The method according to Claim 2, **characterized in that** the energy is supplied to the heating device (30; 30a-e) in the form of hot steam, that the steam is generated in a steam generator unit (13) and is supplied to the heating device (30; 30a-e) via an associated line (25), that the supplied steam is mixed with the concentrated liquid additive in the heating device (30; 30a-e), and that the outflow spout (19; 19a-e) for the concentrated liquid additive is flushed with water after the heated, concentrated liquid additive is dispensed into the container (16) situated underneath, and that the water used for flushing is introduced into a line (25) that leads from the steam generator unit (13) to the heating device (30; 30a-e).

12. The method according to Claim 1, **characterized in that** the outflow spout (19; 19a-e) for the concentrated liquid additive is flushed with a flushing liquid after the heated, concentrated liquid additive is dispensed into the container (16) situated underneath, that the outflow spout (19; 19a-e) for the concentrated liquid additive comprises an outer jacket (20) and an inner tube (21), situated concentrically therein, for transporting the concentrated liquid additive, and that flushing liquid is delivered to the outside, between the outer jacket (20) and the inner tube (21), in order to flush the outer side of the inner tube (21).

13. An automatic beverage machine (10) for carrying out the method according to Claim 1, comprising at least one storage container (11, 12; 11a-e) for the concentrated liquid additive for preparing the mixed beverage, means (15, 28, P4, V6) for supplying a predetermined quantity of base liquid for the mixed beverage to be prepared, and at least one heating device (30; 30a-e) that has a first inlet that is connected to the at least one storage container (11, 12; 11a-e) via a first line (23, 24), wherein the at least one heating device (30; 30a-e) is designed for heating the concentrated liquid additive, supplied via the first line (23, 24), by means of supplied energy, **characterized in that** a first apparatus (18) is provided via which the base liquid may be dispensed into a container, in particular a cup (16), situated underneath, and that a second apparatus (19, 20, 21; 19a-e), separate from the first apparatus, is provided via which the heated, concentrated liquid additive may be dispensed into the container (16) situated underneath.

14. The automatic beverage machine according to Claim 13, **characterized in that** the second apparatus comprises at least one outflow spout (19; 19a-e) that is directly connected to an outlet of the at least one heating device (30; 30a-e).

15. The automatic beverage machine according to Claim 13, **characterized in that** means for conveying the concentrated liquid additive, in particular in the form of a pump (P1, P2; P1a-e), are situated in the first line (23, 24).

16. The automatic beverage machine according to Claim 13, **characterized in that** an electric heater (32) is situated in the heating device (30; 30a-e) for heating the concentrated liquid additive that is supplied via the first line (23, 24).

17. The automatic beverage machine according to Claim 13, **characterized in that** a steam generator unit (13) for generating steam for heating the concentrated liquid additive is provided, that the heating device (30; 30a-e) has a second inlet that is connected to the steam generator unit (13) via a second line (25), that a first controllable valve (V3; V3a-e) for controlling the quantity of steam supplied to the heating device (30; 30a-e) is situated in the second line (25), and that a water heating unit (14) is provided whose outlet is connected to the second apparatus (19, 20, 21; 19a-e) via a third line (26).

18. The automatic beverage machine according to Claim 17, **characterized in that** the third line (26) opens into the second line (25) between the first controllable valve (V3; V3a-e) and the heating device (30; 30a-e).

19. The automatic beverage machine according to Claim 17, **characterized in that** a pump (P3) for conveying the water from the water heating unit (14) is situated in the third line (26), that the second apparatus comprises at least one outflow spout (19; 19a-e) that is directly connected to an outlet of the at least one heating device (30; 30a-e), that the at least one outflow spout (19; 19a-e) comprises an outer jacket (20) and an inner tube (21), situated concentrically therein, for transporting the concentrated liquid additive, that for flushing the outer side of the inner tube (21), a fourth line (27) connects the outlet of the water heating unit (14) to the space between the outer jacket (20) and the inner tube (21), and that the fourth line (27) branches off from the third line (26) downstream from the pump (P3).

20. The automatic beverage machine according to Claim 13, **characterized in that** multiple storage containers (11, 12; 11a-e) are provided for different concentrated liquid additives, that a separate heating device (30; 30a-e) and a separate second apparatus (19, 20, 21; 19a-e) are associated with each of the storage containers (11, 12; 11a-e), and that each heating device (30; 30a-e) is connected to the associated storage container (11, 12; 11a-e) via an associated first line (23, 24).

21. The automatic beverage machine according to Claim 13, **characterized in that** a control unit (22) is provided for automatically controlling the conveying, heating, and dispensing operations.

## Revendications

1. Procédé de préparation d'une boisson mélangée à partir d'un liquide de base et d'un additif liquide concentré conférant une saveur spécifique à la boisson mélangée, procédé dans lequel l'additif liquide concentré est extrait d'un réservoir de stockage (11, 12 ; 11a-e), est ensuite chauffé par l'apport d'énergie, et l'additif liquide concentré chauffé est ensuite mélangé au liquide de base, **caractérisé en ce que** l'additif liquide concentré chauffé et le liquide de base sont distribués par des orifices d'écoulement séparés (18, 19 ; 19a-e) dans un récipient posé dessous, en particulier un gobelet (16), et s'y mélangent automatiquement.

2. Procédé selon la revendication 1, **caractérisé en ce que** l'additif liquide concentré est extrait du réservoir de stockage (11, 12 ; 11a-e) en quantité prédéterminée et est amené par une conduite associée (23, 24) au moyen d'une pompe (P1, P2 ; P1a-e) disposée dans la conduite à un dispositif de chauffage (30 ; 30a-e), et **en ce qu'**une telle quantité d'énergie est apportée au dispositif de chauffage (30 ; 30a-e) que l'additif liquide concentré est chauffé à une température prédéterminée.

3. Procédé selon la revendication 2, **caractérisé en ce que** le dispositif de chauffage (30 ; 30a-e) présente un chauffage électrique (32), et **en ce que** l'énergie est apportée sous forme d'énergie électrique.

4. Procédé selon la revendication 2, **caractérisé en ce que** l'énergie est apportée au dispositif de chauffage (30 ; 30a-e) sous forme de vapeur chaude, **en ce que** la vapeur est générée dans une unité de génération de vapeur (13) et est amenée au dispositif de chauffage (30 ; 30a-e) par une conduite associée (25), **en ce que** la vapeur amenée est mélangée à l'additif liquide concentré dans le dispositif de chauffage (30 ; 30a-e), et **en ce que** le brassage de vapeur et d'additif liquide concentré et le chauffage associé de l'additif liquide concentré ont lieu pendant le passage de l'additif liquide concentré à travers le dispositif de chauffage (30 ; 30a-e).

5. Procédé selon la revendication 2, **caractérisé en ce que** la température de l'additif liquide concentré chauffé est mesurée et surveillée au moyen d'un capteur de température (31) disposé dans le dispositif de chauffage (30 ; 30a-e).

6. Procédé selon la revendication 1, **caractérisé en ce que** l'additif liquide concentré chauffé et le liquide de base sont distribués en même temps dans le récipient (16) posé dessous.

7. Procédé selon la revendication 1, **caractérisé en ce que** l'additif liquide concentré chauffé comprend du chocolat et **en ce que** le liquide de base est du lait.

8. Procédé selon la revendication 1, **caractérisé en ce que** l'additif liquide concentré chauffé comprend un sirop et **en ce que** le liquide de base est de l'eau.

9. Procédé selon la revendication 2, **caractérisé en ce que** l'énergie est apportée au dispositif de chauffage (30 ; 30a-e) sous forme de vapeur chaude, **en ce que** la vapeur est générée dans une unité de génération de vapeur (13) et est amenée au dispositif de chauffage (30 ; 30a-e) par une conduite associée (25), et **en ce que** l'orifice d'écoulement (19 ; 19a-e) pour l'additif liquide concentré, après distribution de l'additif liquide concentré chauffé dans le récipient (16) posé dessous, est purgé avec un supplément de vapeur issu de l'unité de génération de vapeur (13).

10. Procédé selon la revendication 1, **caractérisé en ce que** l'orifice d'écoulement (19 ; 19a-e) pour l'additif liquide concentré, après distribution de l'additif liquide concentré chauffé dans le récipient (16) posé dessous, est rincé avec un liquide de rinçage, et **en ce que** comme liquide de rinçage, de l'eau chaude est utilisée qui est amenée d'une unité de chauffage d'eau (14) à l'orifice d'écoulement (19 ; 19a-e) par une conduite associée.

11. Procédé selon la revendication 2, **caractérisé en ce que** l'énergie est apportée au dispositif de chauffage (30 ; 30a-e) sous la forme de vapeur chaude, **en ce que** la vapeur est générée dans une unité de génération de vapeur (13) et est amenée au dispositif de chauffage (30 ; 30a-e) par une conduite associée (25), **en ce que** la vapeur amenée est mélangée à l'additif liquide concentré dans le dispositif de chauffage (30 ; 30a-e), et **en ce que** l'orifice d'écoulement (19 ; 19a-e) pour l'additif liquide concentré, après distribution de l'additif liquide concentré chauffé dans le récipient (16) posé dessous, est rincé avec de l'eau, et **en ce que** l'eau utilisée pour le rinçage est introduite dans une conduite (25) allant de l'unité de génération de vapeur (13) au dispositif de chauffage (30 ; 30a-e).

12. Procédé selon la revendication 1, **caractérisé en ce que** l'orifice d'écoulement (19 ; 19a-e) pour l'additif liquide concentré, après distribution de l'additif liquide concentré chauffé dans le récipient (16) posé dessous, est rincé avec un liquide de rinçage, **en ce que** l'orifice d'écoulement (19 ; 19a-e) pour l'additif liquide concentré comprend une enveloppe extérieure (20) et un tuyau intérieur (21) disposé de manière concentrique à l'intérieur de celle-ci pour le transport de l'additif liquide concentré, et **en ce que** du liquide de rinçage est libéré vers l'extérieur entre l'enveloppe extérieure (20) et le tuyau intérieur (21) pour le rinçage de la face extérieure du tuyau intérieur (21).

13. Distributeur de boissons (10) pour exécuter le procédé selon la revendication 1, comprenant au moins un réservoir de stockage (11, 12 ; 11a-e) pour l'additif liquide concentré pour la préparation de la boisson mélangée, des moyens (15, 28, P4, V6) pour amener une quantité prédéterminée d'un liquide de base pour la boisson mélangée à préparer, et au moins un dispositif de chauffage (30 ; 30a-e) présentant une première entrée communiquant avec ledit au moins un réservoir de stockage (11, 12 ; 11a-e) par une première conduite (23, 24), dans lequel ledit au moins un dispositif de chauffage (30 ; 30a-e) est réalisé pour chauffer l'additif liquide concentré amené par la première conduite (23, 24) par de l'énergie apportée, **caractérisé en ce qu'**un premier dispositif (18) est prévu par lequel le liquide de base peut être distribué dans un récipient posé dessous, en particulier un gobelet (16), et **en ce qu'**un deuxième dispositif (19, 20, 21 ; 19a-e), séparé du premier dispositif, est prévu, par lequel l'additif liquide concentré chauffé peut être distribué dans le récipient (16) posé dessous.

14. Distributeur de boissons selon la revendication 13, **caractérisé en ce que** le deuxième dispositif comprend au moins un orifice d'écoulement (19 ; 19a-e) en communication directe avec ledit au moins un dispositif de chauffage (30 ; 30a-e).

15. Distributeur de boissons selon la revendication 13, **caractérisé en ce que** dans la première conduite (23, 24) sont disposés des moyens pour débiter l'additif liquide concentré, en particulier sous la forme d'une pompe (P1, P2 ; P1a-e).

16. Distributeur de boissons selon la revendication 13, **caractérisé en ce que** dans le dispositif de chauffage (30 ; 30a-e) un chauffage électrique (32) est disposé pour chauffer l'additif liquide concentré amené par la première conduite (23, 24).

17. Distributeur de boissons selon la revendication 13, **caractérisé en ce qu'**une unité de génération de vapeur (13) pour générer de la vapeur pour chauffer l'additif liquide concentré est prévue, **en ce que** le dispositif de chauffage (30 ; 30a-e) présente une deuxième entrée reliée à l'unité de génération de vapeur (13) par une deuxième conduite (25), **en ce que** dans la deuxième conduite (25) est disposée une première vanne réglable (V3 ; V3a-e) pour régler la quantité de la vapeur amenée au dispositif de chauffage (30 ; 30a-e), et **en ce qu'**une unité de chauffage d'eau (14) est prévue, dont la sortie communique avec le deuxième dispositif (19, 20, 21 ; 19a-e) par une troisième conduite (26).

18. Distributeur de boissons selon la revendication 17, **caractérisé en ce que** la troisième conduite (26) débouche dans la deuxième conduite (25) entre la première vanne réglable (V3 ; V3a-e) et le dispositif de chauffage (30 ; 30a-e).

19. Distributeur de boissons selon la revendication 17, **caractérisé en ce que** dans la troisième conduite (26) est disposée une pompe (P3) pour débiter l'eau de l'unité de chauffage d'eau (14), **en ce que** le deuxième dispositif comprend au moins un orifice d'écoulement (19 ; 19a-e) communiquant directement avec une sortie dudit au moins un dispositif de chauffage (30 ; 30a-e), **en ce que** ledit au moins un orifice d'écoulement (19 ; 19a-e) comprend une enveloppe extérieure (20) et un tuyau intérieur (21) disposé de manière concentrique à l'intérieur de celle-ci pour le transport de l'additif liquide concentré, **en ce que** pour le rinçage de la face extérieure du tuyau intérieur (21), une quatrième conduite (27) relie la sortie de l'unité de chauffage d'eau (14) à l'espace entre l'enveloppe extérieure (20) et le tuyau intérieur (21), et **en ce que** la quatrième conduite (27) se sépare de la troisième conduite (26) en aval de la pompe (P3).

20. Distributeur de boissons selon la revendication 13, **caractérisé en ce que** plusieurs réservoirs de stockage (11, 12 ; 11a-e) sont prévus pour différents additifs liquides concentrés, **en ce qu'**à chacun des réservoirs de stockage (11, 12 ; 11a-e) est attribué son propre dispositif de chauffage (30 ; 30a-e) ainsi qu'un deuxième dispositif propre (19, 20, 21 ; 19a-e), et **en ce que** chaque dispositif de chauffage (30 ; 30a-e) communique avec le réservoir de stockage (11, 12 ; 11a-e) associé par une première conduite associée (23, 24).

21. Distributeur de boissons selon la revendication 13, **caractérisé en ce qu'**une unité de commande (22) est prévue pour la commande automatique des opérations de débit, de chauffage et de distribution.
